# EUROPEAN PATENT APPLICATION

(11) **EP 1 564 611 A2**
(43) Date of publication of application: **17.08.2005**
(21) Application number: 05250698.7
(22) Date of filing: 08.02.2005
(51) Int. Cl.: G05B 19/414

(54) **Machine controller**

(30) Priority: 10.02.2004 JP 2004033463
(71) Applicant: FANUC LTD, Minamitsuru-gun, Yamanashi 401-0597 (JP)
(72) Inventor: Iwashita, Yasusuke, Fujiyoshida-shi, Yamanashi, 403-0003 (JP); Taniguchi, Mitsuyuki, Gotenba-shi, Shizuoka, 412-0045 (JP); Horiuchi, Hiromichi, Fujiyoshida-shi, Yamanashi, 403-0006 (JP)
(74) Representative: Billington, Lawrence Emlyn

(57) **Abstract**

A machine controller provided by a servo motor controller (3) includes a first receiver circuit (31a) for receiving signals from an encoder (4) that detects the position of the controlled machine (1), and a second receiver circuit (31b) for receiving signals sent from a sensor unit (5). The first receiver circuit (31a) has the same configuration as the second receiver circuit (31b), and the same interface is used between the sensor unit (5) and the second receiver circuit (31b) as is used between the encoder (4) and the first receiver circuit (31a).

## Description

### BACKGROUND OF THE INVENTION

### 1. Field of the Invention

The present invention relates to a machine controller that controls a robot, a machine tool, or another machine driven by servo motors.

### 2. Description of the Related Art

Robots, machine tools, and various other types of industrial machines use servo motors to drive their moving parts. The driving of these machines is controlled in position control loops and velocity control loops according to feedback signals from encoders that detect the positions of the servo motors or the moving parts.

To reduce machine vibration accompanying high-speed operation of a machine, an acceleration sensor may also be provided in the machine and the output torque of the servo motor may be restricted according to information received from the acceleration sensor, as disclosed in, for example, Japanese Patent Application Laid-open 2002-215244.

It is also known art to provide a temperature sensor for detecting the temperature in a servo motor, or a sensor for detecting the machine temperature, to detect overload of the servo motor and other conditions.

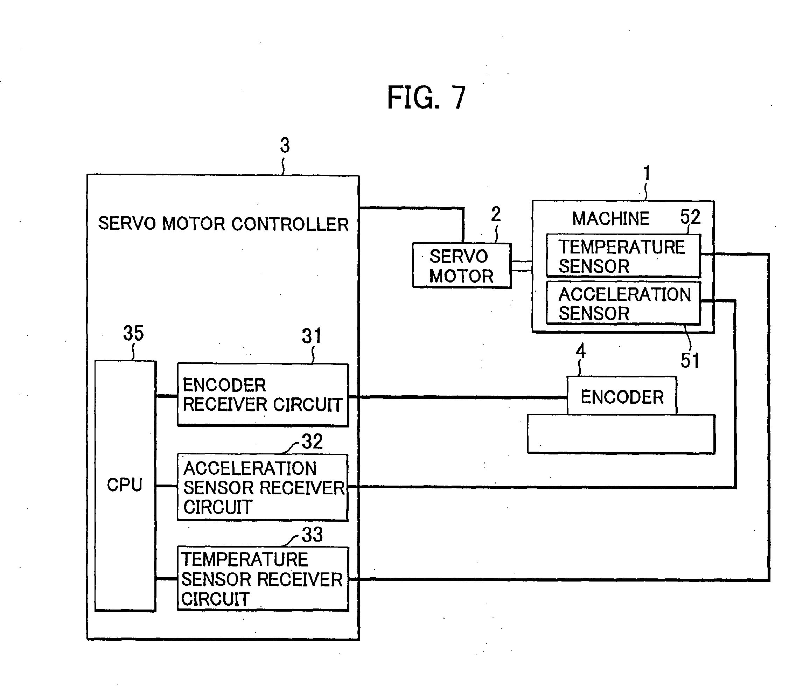

FIG. 7 is a block diagram showing an exemplary structure of a conventional machine controller for a machine having acceleration and temperature sensors as mentioned above, information detected by these sensors being fed back to the servo motor controller.

In FIG. 7, the machine 1 is provided with an encoder 4 that detects the position and/or velocity of a moving part of the machine 1. Information on the position and/or velocity of the moving part detected by the encoder 4 is fed back to the servo motor controller 3. In controlling the driving of the servo motor 2 that drives the moving part of the machine 1, the servo motor controller 3 uses the position and/or velocity feedback signals to perform position and/or velocity feedback control of the servo motor 2.

There are also provided an acceleration sensor 51 that detects acceleration of the moving part of the machine 1 and a temperature sensor 52 that detects the temperature of the machine 1 or servo motor 2; the outputs of the acceleration sensor 51 and temperature sensor 52 are fed back to the servo motor controller 3 together with the position and/or velocity feedback signals for the moving part.

The servo motor controller 3 has an encoder receiver circuit 31 that receives position and/or velocity information from the encoder 4, an acceleration sensor receiver circuit 32 that receives information on the detected acceleration from the acceleration sensor 51, and a temperature sensor receiver circuit 33 that receives information on the detected temperature from the temperature sensor 52; the information received by the receiver circuits 31, 32, and 33 is inputted to a processor 35 in the servo motor controller 3; the processor 35 performs processing that controls the driving of the servo motor 2.

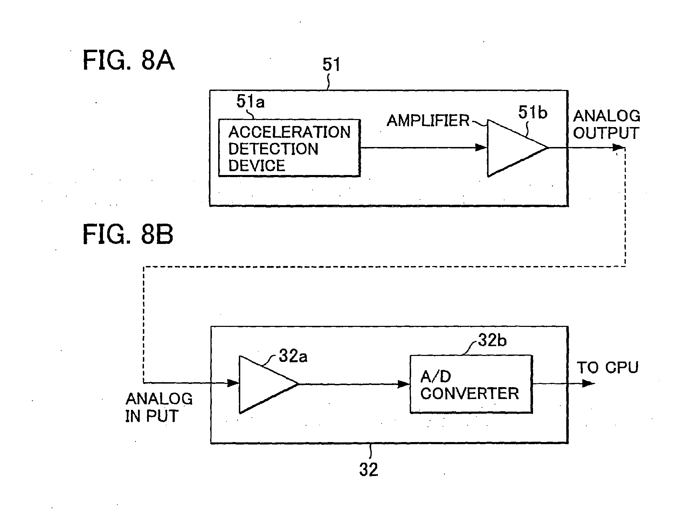

FIG. 8A shows the structure of the acceleration sensor 51 shown in FIG.7; FIG. 8B shows the structure of the acceleration sensor receiver circuit 32. As shown in FIG. 8A, the acceleration sensor 51 comprises an acceleration detection device 51a and an amplifier 51b that amplifies output from the acceleration detection device 51a and sends the amplified output to the servo motor controller 3 through a cable. As shown in FIG. 8B, the acceleration sensor receiver circuit 32 comprises an analog signal receiver circuit 32a that receives the analog output from the acceleration sensor 51 and an A/D converter 32b that converts the output from the analog signal receiver circuit 32a into a digital signal and sends the digital signal to the processor 35 in the servo motor controller 3.

The temperature sensor 52 in FIG. 7 comprises a temperature detection device and an amplifier that amplifies the output from the temperature detection device and sends the amplified output to the servo motor controller 3 through another cable. The temperature sensor receiver circuit 33 comprises an analog signal receiver circuit that receives the analog output from the temperature sensor 52 and an A/D converter that converts the output from the analog signal receiver circuit to a digital signal and sends the digital signal to the processor 35 in the servo motor controller 3.

FIG. 7 shows an example in which there is a single servo motor that drives the moving part of the machine 1; if the machine 1 has a plurality of moving parts and their positions are controlled by feedback to the servo motor controller 3, each moving part is driven by a separate servo motor and has a separate encoder. In the example in FIG. 7, the encoder 4 detects the position of the moving part in a fully closed loop, but the encoder may be mounted on the servo motor 2 instead to detect the position and/or velocity of the servo motor 2, thereby detecting the position and other information of the moving part driven by the servo motor 2 in a semi-closed loop.

To send the machine status information detected by the acceleration sensor, temperature sensor, and other sensors to the servo motor controller, conventional machine controllers use a separate interface for each sensor. To receive information from the sensors, the servomotor controller requires a number of receiver circuits equal to the number of sensors (information sources).

The servo motor controller, however, is a general-purpose device designed for control of various types of machines. To be able to control a machine having many moving parts, the servo motor controller has a plurality of axis control sections for driving a plurality of servo motors, and a plurality of encoder receiver circuits for receiving encoder signals from the moving parts. When the machine to be controlled has only a small number of moving parts, therefore, one or more encoder receiver circuits in the servo motor controller are left unused.

### SUMMARY OF THE INVENTION

A machine controller in a first embodiment of the present invention has a servo motor, a sensor unit having a sensor for detecting a state of a machine driven by the servo motor and means for external transmission of the information detected by the sensor, an encoder for detecting a position of the machine, and a servo motor controller that receives the information detected by the sensor and drives the servo motor according to the received information. The interface between the sensor unit and servo motor controller has the same structure as the interface between the encoder and servo motor controller.

A machine controller in a second embodiment of the present invention has a servo motor, a sensor unit having a sensor for detecting a state of a machine driven by the servo motor and means for external transmission of the information detected by the sensor, an encoder for detecting a position of the machine, and a servo motor controller including a first receiver circuit that can receive signals from the encoder and a second receiver circuit that receives signals sent from sensor unit. The second receiver circuit has the same structure as the first receiver circuit, and identical interfaces are used between the encoder and the first receiver circuit and between the sensor unit and the second receiver circuit.

In the first and second embodiments of the machine controller, a plurality of sensors for detecting machine states may be provided, the interfaces may be serial interfaces, and information detected by the plurality of sensors may be sent over a single serial interface cable.

The present invention enables encoder receiver circuits provided in the servo motor controller to receive signals from sensors other than an encoder, so unused encoder receiver circuits provided for control of moving parts (or their servo motors) can be used to receive signals from sensors; this eliminates the need to allocate additional receiver circuits to sensors, enabling hardware resources to be used efficiently. Furthermore, information from a plurality of sensors can be sent over a single interface cable, so fewer cables are required.

### BRIEF DESCRIPTION OF THE DRAWINGS

The purposes and advantages of the present invention, including those described above, will be clarified by reference to the attached drawings in combination with the description of the embodiment presented below. Of these drawings:
FIG. 1 is a block diagram showing a first embodiment of the machine controller according to the present invention;
FIGs. 2A to 2C illustrate signal transmission and reception between the encoder and an encoder receiver circuit in the machine controller in FIG. 1;
FIG. 3 is a block diagram showing details of the sensor unit in the machine controller in FIG. 1;
FIGs. 4A and 4B illustrate the operation of the sensor unit in FIG. 3;
FIG. 5 is a diagram for explaining that each of a plurality of encoder receiver circuits can be connected to any of the encoder and sensor unit;
FIG. 6 is a diagram for explaining that the processor in the servo motor controller in FIGs. 1 and 5 stores the data received by the plurality of encoder receiver circuits in corresponding registers for a position control process and a vibration control process;
FIG. 7 is a block diagram showing a conventional machine controller; and
FIGs. 8A and 8B show the structures of the acceleration sensor and acceleration sensor receiver circuit, respectively, in the machine controller in FIG.

### DESCRIPTION OF THE EMBODIMENTS

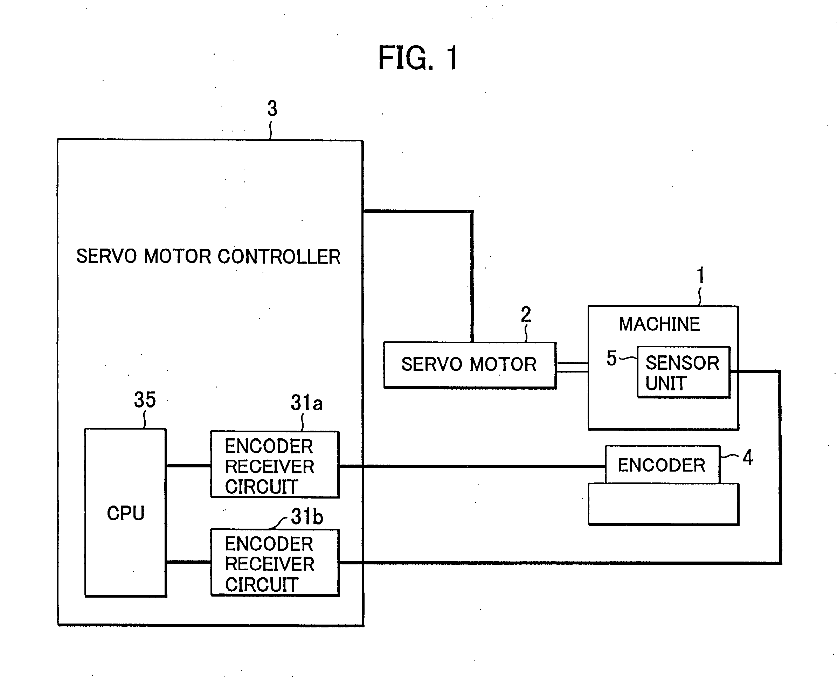

FIG.1 is a block diagram of a machine controller that embodies the present invention; the elements identical to those in the exemplary conventional machine controller shown in FIG. 7 are assigned the same reference numerals as in FIG. 7. The machine controller in FIG. 1 differs from the conventional machine controller in FIG. 7 in that:
(1) a sensor unit 5 is provided in the machine 1 and output information from the sensor unit 5 is received by an encoder receiver circuit 31b, and
(2) the interface between the sensor unit 5 and servo motor controller 3 has the same configuration as the interface between the encoder 4 and servo motor controller 3.

The machine 1 is provided with a servo motor 2 that drives a moving part of the machine 1. The encoder 4 detects the position and/or velocity of the moving part. In the example shown in FIG. 1, a single servo motor 2 is provided; if the machine has a plurality of servo-driven moving parts, corresponding number of servo motors 2 and encoders 4 are provided. Instead of directly detecting the position and/or velocity of the moving part in the example in FIG. 1, the encoder 4 may detect the rotational position and/or velocity of the servo motor 2 to detect the position and velocity of the moving part.

The processor 35 in the servo motor controller 3 performs position loop control and/or velocity loop control processes to control the driving of the servo motor 2 according to commands for moving the moving part that are issued from a commanding program or the like, and to the position and/or velocity feedback information sent from the encoder 4 and received by an encoder receiver circuit 31a. In this regard, the inventive controller is similar to a conventional controller.

The sensor unit 5 in the machine 1 in this embodiment detects states of the machine 1 such as its temperature and the acceleration of the moving part; output information from the sensor unit 5 is sent to encoder receiver circuit 31b. That is, output information is sent from the sensor unit 5 provided in the machine 1 to an unused one of a plurality of encoder receiver circuits provided in the servo motor controller 3. This idea is not found in the conventional machine controller shown in FIG. 7.

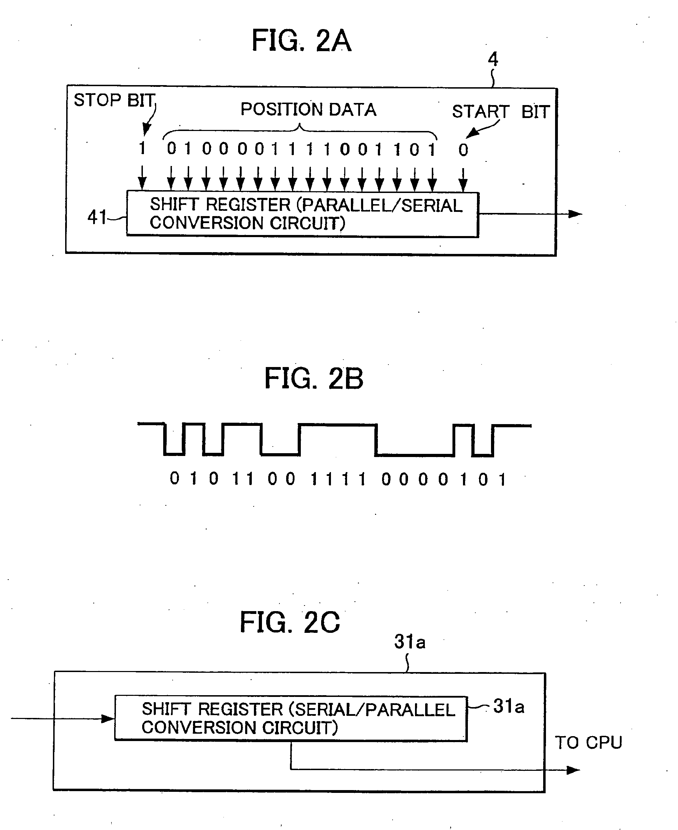

Signal transmission and reception between the encoder 4 and encoder receiver circuit 31a shown in FIG. 1 will now be described with reference to FIGs. 2A to 2C.

Position data detected by a position detector in the encoder 4 is supplemented with start bits and stop bits at its leading and trailing edges thereof, and then stored in a shift register 41 forming a parallel/serial conversion circuit. The position data is then sent through a cable to encoder receiver circuit 31a in the servo motor controller 3 as a serial data signal, which is a string of 1s and 0s (high and low signal levels), as shown in FIG. 2B.

The encoder receiver circuit 31a converts the serial data signal into parallel signals by means of a serial/parallel conversion circuit formed by a shift register 31a', and the position data is then outputted to the processor 35 in the servo motor controller, as shown in FIG. 2C.

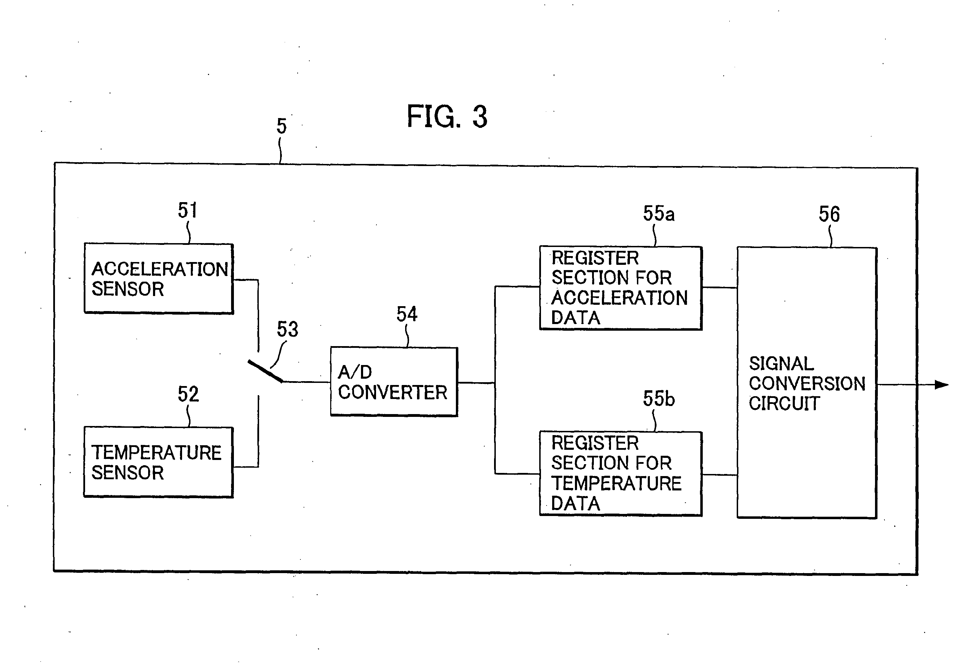

FIG. 3 is a block diagram showing details of the sensor unit 5. The sensor unit 5 has an acceleration sensor 51 and temperature sensor 52. Analog output from the acceleration sensor 51 or analog output from the temperature sensor 52 is input to an A/D converter 54 according to the state to which a switch 53 is set.

The acceleration information and temperature information converted to digital signals by the A/D converter 54 are stored in a shift register, comprising a register section 55a for acceleration data and a register section 55b for temperature data which forms the parallel/serial conversion circuit, respectively. The data stored in the register sections 55a, 55b is then sent to the servo motor controller 3 as serial data, wherein a signal conversion circuit 56 performs communication protocol processing so that the interface between the sensor unit 5 and encoder receiver circuit 31b is the same as the interface between the encoder 4 and encoder receiver circuit 31a.

In the servo motor controller 3, the encoder receiver circuit 31b can receive the signal sent from the sensor unit 5, because the signal conforms to the interface having the same configuration as that used between the encoder 4 and encoder receiver circuit 31a.

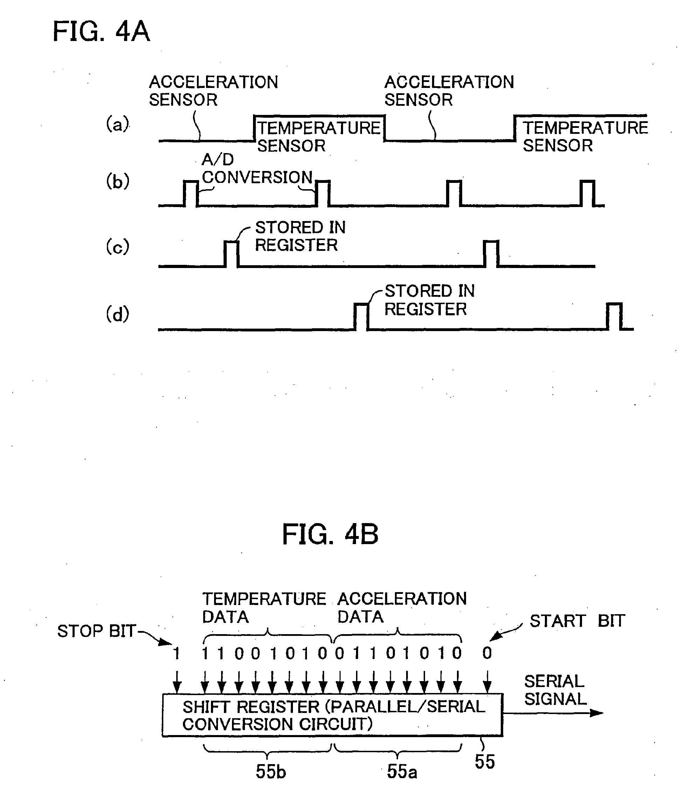

The operation of the sensor unit 5 shown in FIG. 3 will now be described with reference to FIGs. 4A and 4B.

The switch 53 toggles between the acceleration sensor and temperature sensor at certain intervals, as shown in FIG. 4A (a). The A/D converter 54 converts the analog signals into digital signals at the midpoint between successive switchovers of the switch 53, as shown in FIG. 4A (b). The converted digital signal data is written into the acceleration data register section 55a of the shift register just before the switch 53 toggles from the acceleration sensor to the temperature sensor, as shown in FIG. 4A (c), and into the temperature data register section 55b of the shift register just before the switch 53 toggles from the temperature sensor to the acceleration sensor, as shown in FIG. 4A (d).

The signal conversion circuit 56 then adds start and stop bits to the acceleration data and temperature data that have been written in the shift register, which comprises the register section 55a for acceleration data and the register section 55b for temperature data, matching the communication protocol to the communication protocol between the encoder 4 and encoder receiver circuit 31a (that is, the same interface is used); the signal conversion circuit then sends the acceleration data and temperature data to the servomotor controller 3. In the servo motor controller 3, the encoder receiver circuit 31b, which has the same configuration as the encoder receiver circuit 31a that receives signals from the encoder 4, receives the signal.

Which of the encoder receiver circuits 31a, 31b is used to receive signals from the encoder 4 and which encoder receiver circuit is used to receive signals from the sensor unit 5 is preset in the processor 35 in the servo motor controller 3. Therefore, the processor 35 can identify the received data as position information from the encoder 4 or sensor information from the sensor unit 5. The sensor information from the sensor unit 5, which includes both acceleration data and temperature data, is read from the shift register that constitutes a serial/parallel converter, distinguishing the first half 8 bits and the latter half 8 bits of the received signal as an acceleration data and a temperature data, respectively.

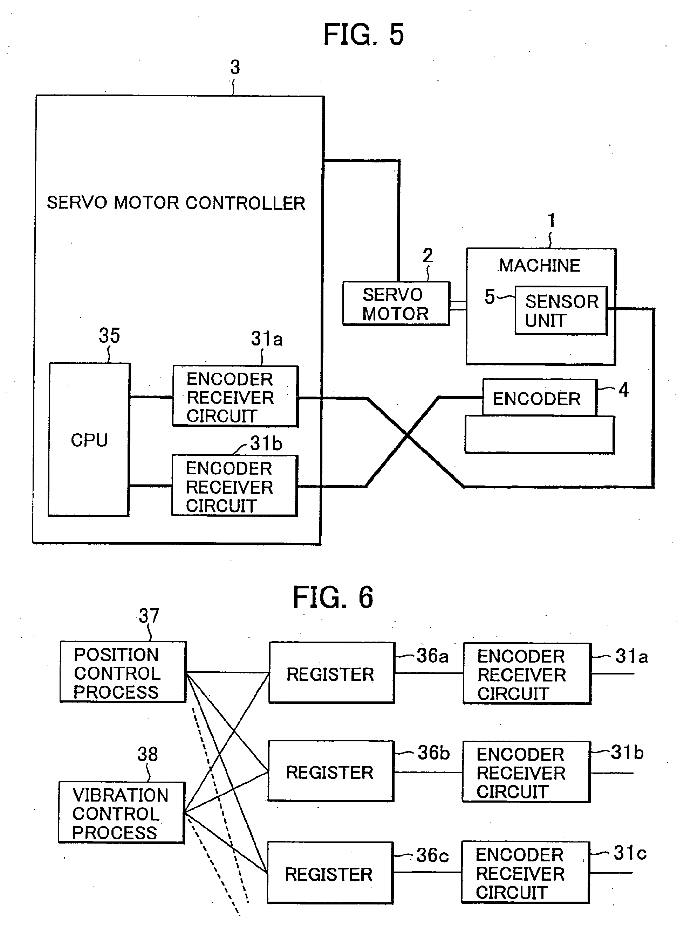

The receiver circuits, provided in the servo motor controller 3, which receives signals from the encoder and sensors are all structured identically as encoder receiver circuits, and the interfaces between the encoder receiver circuits and the encoder, sensors, and other devices all have the same configuration. Any one of the encoder receiver circuits provided in the servo motor controller 3 can be used as a receiver circuit to be connected to the encoder 4 and a receiver circuit to be connected to the sensor unit 5. In FIG. 1, receiver circuit 31a receives output data from the encoder 4 and receiver circuit 31b receives output data from the sensor unit 5, but receiver circuit 31a may receive output data from the senor unit 5 and receiver circuit 31b may receive output data from the encoder 4 instead, as shown in FIG. 5.

The processor 35 in the servo motor controller 3 stores the data received by the encoder receiver circuits 31a, 31b, 31c,... in respective registers 36a, 36b, 36c..., as shown in FIG. 6. The servo motor controller 3 is configured such that data in any one of the registers can be read selectively in the position control process 37 and vibration control process 38, executed by the processor 35 in a control circuit or by software. Once the connections between the encoder receiver circuits and the encoder and sensor units are set, the register 36a, 36b, 36c,... to be read in respective control processes are selected accordingly.

## Claims

1. A machine controller comprising:
a servo motor;
a sensor unit having a sensor for detecting a state of a machine driven by the servo motor and means for transmitting information detected by the sensor to the outside;
a receiver circuit for receiving signals sent from an encoder which detects the position of said machine; and
a servo motor controller for receiving the information detected by said sensor and driving said servo motor according to the received information;
wherein the communication protocol of said sensor unit is made identical to that of the encoder, and
the receiver circuit for receiving signals sent from the encoder is used as a receiver circuit for receiving signals sent from said sensor unit.

2. A machine controller comprising:
a servo motor;
a sensor unit having a sensor for detecting a state of a machine driven by the servo motor and means for transmitting information detected by the sensor to the outside; and
a servo motor controller having a first receiver circuit for receiving signals sent from said sensor unit and a second receiver circuit adapted to receive signals sent from an encoder;
wherein the communication protocol of said sensor unit is made identical to that of the encoder, and
the configuration of the first receiver circuit is made identical to that of the second receiver circuit.

3. The machine controller according to claim 1 or claim 2, wherein a plurality of sensors for detecting states of the machine are provided, said communication protocol is a serial interface, and information detected by the plurality of sensors is sent by means of a single serial interface cable.

4. The machine controller according to claim 2, wherein signals from both the first receiver circuit and the second receiver circuit can be acquired by the process of the servo motor controller.

5. The machine controller according to claim 1 or claim 2, wherein said sensor in the sensor unit is an acceleration sensor.

6. The machine controller according to claim 1 or claim 2, wherein said sensor in the sensor unit is a temperature sensor.
